# NEW EUROPEAN PATENT SPECIFICATION

(11) **EP 1 278 810 B2**
(45) Date of publication and mention of the opposition decision: **04.07.2007**
(45) Mention of the grant of the patent: 10.03.2004
(21) Application number: 01928241.7
(22) Date of filing: 02.05.2001
(51) Int. Cl.: C09J 11/06, C09J 101/26

(54) **PERFUMED ADHESIVE COMPOSITION, IN PARTICULAR FOR USE AS WALLPAPER PASTE**
PARFÜMIERTE KLEBSTOFFZUSAMMENSETZUNG INSBESONDERE ZUM GEBRAUCH ALS TAPETENKLEISTER
COMPOSITION ADHESIVE PARFUMEE, NOTAMMENT UTILE EN TANT QUE COLLE POUR PAPIER TENTURE

(30) Priority: 02.05.2000 NL 1015087
(43) Date of publication of application: 29.01.2003
(73) Proprietor: Eurovite Nederland B.V., 6710 BB Ede (NL)
(72) Inventor: VAN DIJK, Barend, Gerrit, NL-6716 ET Ede (NL)
(74) Representative: van Westenbrugge, Andries
(86) International application number: PCT/NL2001/000330
(87) International publication number: WO 2001/083635

(56) References cited:
- GB-A- 2 093 856
- GB-A- 2 292 082
- DATABASE WPI Section Ch, Week 198743 Derwent Publications Ltd., London, GB; Class A81, AN 1987-301557 XP002156414 & JP 62 209179 A (TORAYA WOOL KK), 14 September 1987 (1987-09-14) cited in the application
- PATENT ABSTRACTS OF JAPAN vol. 013, no. 549 (C-662), 7 December 1989 (1989-12-07) & JP 01 225644 A (NIPPON EKISHIYOU KK), 8 September 1989 (1989-09-08)

## Description

The present invention relates to a perfumed adhesive composition which, inter alia, can be used as wallpaper paste.

The invention relates to an adhesive composition in the form of a powder or granules which can be mixed with water by an end user to provide a ready-to-use wallpaper paste. According to one embodiment of the invention this powder or these granules are in the form of a packed commercial product.

Wallpaper paste is as a rule marketed as a powder or granules - packed as a commercial product - that is or are mixed ("made up") with water by the end user just before use and is or are then ready for use. In addition to one or more base constituents suitable for use in or as wallpaper paste - such as potato starch, cellulose derivatives or PVA powders - such powders can also contain yet further constituents suitable for wallpaper paste, such as preservatives. Such known (powders for) wallpaper pastes are, for example, marketed by the Applicant under the name FOBY® wallpaper paste.

A disadvantage of these conventional commercial products is that they can smell unpleasant during use. In particular, the conventional compositions produce a typical "glue odour", which is mainly caused by the base constituents and/or preservatives present. An additional factor is that when (re)papering walls in "old" houses an unpleasant odour can also be released which originates from the paper (still) present on the wall and/or from layers of glue and/or size layers (still) present on the wall. Moreover, unpleasant odours of this type can linger for a long time after use (that is to say for days after wallpapering).

In principle, the problem of the unpleasant odour of the conventional compositions could be solved by incorporating an odour substance in such a composition, which odour substance is intended to mask or to eliminate the glue odour. However, it has been found that this solution is not adequate in practice, in particular because the compositions - in the form of packed commercial products - usually are (have to be) stored for a long (prolonged) period before they are used. With this solution it has been found that the bulk of the odour substance is already released from the composition during this storage, as a result of which the odour substance is not only undesirably released into the store or shop but, moreover, the composition will also have lost (too) much of its desired odour (power) by the point in time when it is used/made up by the end user. Therefore, the incorporation of an odour substance or perfume as such in a known wallpaper paste composition leads to a product that has too short a "shelf life" to be suitable for use as a commercial product.

A fluid adhesive composition containing an adhesive, cyclodextrin and an odour substance is described in JP 01 225644. Such a preparation has the disadvantage that the odour substance will be released rapidly because cyclodextrin is in contact with water. This preparation will therefore not be able to be stored for a long period without appreciable loss of odour. If the preparation is nevertheless stored for a long period, it will have lost much of its desired odour power. This preparation also is therefore not suitable for use as a commercial product.

The aim of the invention is to provide a solution to the abovementioned problems.

More particularly, the aim of the invention is to provide a composition for the preparation of a wallpaper paste by an end user - that is to say by stirring with water - that, on the one hand, does not have the disadvantage of an unpleasant odour during use and that, on the other hand, is suitable for marketing as a packed commercial product and that, in this context, in particular can be stored for a prolonged period without loss of the odour (power).

Said aim is achieved according to the invention according to claim 1 and by the use, in a dry, pulverulent, composition for the preparation of wallpaper paste by an end user, of at least one odorous constituent that releases its odour (that is pleasant to the end user) only when the composition comes into contact with water, that is to say is made up by the end user according to claim 5.

In particular, it has been found according to the invention that such a suitable composition can be provided by the use, in a composition known per se for the preparation of a wallpaper paste by an end user, of at least one odorous constituent that contains at least one odour substance and at least one carrier constituent, the odour substance - in said odorous constituent - being associated and/or complexed with the carrier constituent in such a way that the odour substance is essentially released from the odorous constituent only when said odorous constituent comes into contact with water, that is to say during making up of the wallpaper paste composition. An odorous constituent of this type will (also) be referred to below as the "*odour-substance-releasing constituent* ". An odour substance is understood to be any odorous substance or composition, including a perfume.

According to the invention, cyclodextrins and cyclodextrin derivatives can be used as the carrier constituent in such an odour-substance-releasing constituent. A number of preparations based on such cyclodextrins and an odour substance, which are suitable for use in the invention as odour-releasing constituent, are also available commercially, in particular for use in detergents and/or cleaning agents.

The invention therefore relates to an adhesive composition in dry form, wherein the adhesive composition is in the form of a powder or granules, for use in or as wallpaper paste, which comprises:
- an adhesive;
- an odour-substance-releasing constituent that
contains at least one odour substance and at least one carrier constituent selected from cyclodextrins and cyclodextrin derivatives.

The adhesive composition according to the invention is suitable for mixing/stirring with water by an end user with the formation of a ready-to-use (aqueous) composition.

The adhesive composition according to the invention is intended in particular for use as wallpaper paste and in this context can be a so-called "normal" paste, a so-called "special" paste or a (more) specific paste. These terms and pastes of this type will be clear to those skilled in the art. Wallpaper pastes are frequently also marketed as "normal paste" or "special paste".

In the odour-releasing constituent used at least one odour substance will as a rule be associated and/or complexed with - that is to say enclosed in, encapsulated in, incorporated in or otherwise (physically) bound to and/or (physically) bound with - the carrier constituent, and in particular associated and/or complexed in such a way that the odour substance essentially is released from the odour-substance-releasing constituent only when the latter comes into contact with water, that is to say during making up of the adhesive composition by the end user to form the ready-to-use aqueous adhesive composition.

The odour substance used in the odour-substance-releasing constituent can be any odour substance known per se, or any mixture of two or more thereof, which has an odour that is pleasant to the end user and that is suitable for use in adhesive compositions. In this context, the odour substance is, in particular, such that, when it is used in conventional amounts, it is able to eliminate and/or mask the unpleasant glue odour of (the base constituents in) the adhesive compositions.

Thus, for example, odour substances known per se and/or commercially available odour substances can be used, such as pine odour, vanilla odour, lemon odour, citrus odour; or suitable mixtures of two or more thereof. Commercially available mixtures of odour substances can also be used, such as, for example, the mixtures which are referred to as "spring odour" or "summer odour". In this context the odour substances will in particular be chosen on the basis of the desired odour of the end product.

The carrier constituent of the odour-substance-releasing constituent is a substance or compound that is suitable for use in adhesives and that can suitably be used to control the release of an odour substance, that is to say in such a way that the odour substance essentially is released by said carrier constituent only when the odour-substance-releasing constituent comes into contact with water. The substances or compounds used as the carrier constituent are substances or compounds which (are able to) enclose, encapsulate or incorporate and/or are able to bind the odour substance in another way (physically). According to the invention, cyclodextrins, cyclodextrin derivatives and mixtures thereof, for example natural and/or synthetic alpha-, beta- and/or gamma-cyclodextrins and methylated, acetylated or other derivatives thereof are suitable. A number of suitable cyclodextrin derivatives are, for example, marketed by Wacker-Chemie GmbH under the tradenames CAVAMAX® and CAVASOL®.

The odour-releasing constituents used in the invention will as a rule be made up individually, that is to say before they are added to the wallpaper paste composition. This can in general be carried out by mixing one or more odour substances and one or more carrier constituents, that is to say in suitable quantities/ratios and in such a way that the odour substances are enclosed or otherwise suitably incorporated by the carrier constituents.

A number of such preparations based on a complex of a cyclodextrin and an odour substance are also commercially available and these can optionally also be employed as odour-substance-releasing constituents in the invention. Such preparations are currently used, for example, in cleaning agents and detergents and in particular in cleaning cloths and in washing powders.

The adhesive that is used as constituent in the composition according to the invention can be any constituent known per se for adhesives - and in particular for wallpaper pastes - or a mixture of two or more such constituents. Suitable examples of such constituents will be apparent to those skilled in the art and include, for example (without being restricted to these), types of starch such as potato starch or derivatives of such types of starch; celluloses and cellulose derivatives, such as carboxymethylcellulose or methylcellulose; or polyvinyl acetate (PVA) powders; or suitable combinations of two or more thereof. Such constituents are, for example, commercially available under the tradenames Solvitose and Perfectamyl (both from Avebe), Vinnapas (Wacker Chemie), Walocel (Wolff Walrode), Gabrosa (AkzoNobel) or Tylose (Clariant).

For instance, the base constituent used can contain, for example, one or more of the following constituents, in the indicated quantities (based on the total base constituent):

### Base constituent

- potato starch: 0 - 100 % (m/m)
- carboxymethylcellulose 0 - 100 % (m/m)
- methylcellulose 0 - 50 % (m/m)
- polyvinyl acetate powder 0 - 25 % (m/m)
to make up a total of 100 % (m/m) of the base constituent.

In addition to the adhesive and the odour-releasing constituent, the wallpaper paste composition according to the invention can optionally also contain one or more constituents known per se for wallpaper paste, such as preservatives.

In general, the wallpaper paste composition according to the invention can be prepared by mixing (the constituents of) the adhesive, the one or more further constituents and the odour-substance-releasing constituent with one another in suitable amounts. As a rule, during this operation the base constituents and the further constituents will first be mixed, with the formation of a wallpaper paste base composition known per se, after which the odour-substance-releasing constituent is then added, usually as the final step or one of the final steps in the preparation of the final adhesive composition according to the invention.

In this procedure the adhesive and the optional further constituents will as a rule be used in quantities known per se, which as a rule will be between (based on the "wallpaper paste base composition" without the odour-substance-releasing constituent):

### Wallpaper paste base composition

- base constituent: 0 - 100 % (m/m);
- other constituents: 0 - 0.5 % (m/m)
to make up a total of 100 % (m/m) of the wallpaper paste base composition.

The odour-substance-releasing constituent is then added to this wallpaper paste base composition in a suitable amount, that is to say an amount that is sufficient to mask/eliminate the unpleasant odour of the (constituents of) the wallpaper paste base composition during use of the adhesive composition.

Such amounts will as a rule be between 0.5 and 5 % (m/m) (such as approximately 2.5 % (m/m)), based on the total composition, depending on the odour-substance-releasing constituent used and the further constituents of the adhesive.

Mixing of the various constituents of the wallpaper paste composition will as a rule be carried out in a manner known per se, for example by dry mixing of the constituents in a horizontal belt or blade mixer or a mixer with a vertical screw.

With this procedure the composition according to the invention is obtained in a dry form wherein the adhesive composition is a powder or granules, which essentially has (have) no odour or only a slight odour of the odour substance used, but after mixing with water has (have) the odour of the odour substance used, that is to say instead of a typical glue odour. Furthermore, the composition can advantageously be stored for a prolonged period - that is to say for months up to a few years - without it substantially losing its odour (power) at the time of end use.

It will be clear to those skilled in the art from the above that an adhesive/wallpaper paste composition according to the invention can also be obtained by adding one or more odour-substance-releasing constituents as described above to an adhesive/wallpaper paste composition in dry form wherein the adhesive composition is in the form of a powder or granulates that is known per se, and the compositions thus obtained also fall within the field of the invention.

In a further aspect the invention therefore relates to the use of at least one odour-substance-releasing constituent (as described above) for perfuming an adhesive composition, in particular for perfuming an adhesive composition as described herein, and more particularly for perfuming a wallpaper paste composition, these compositions being in a dry form wherein the adhesive composition is in the form of a powder or granulates that is intended to be stirred into water by an end user, as described above. In this context the at least one odour-substance-releasing constituent will as a rule be used in the quantities indicated above.

The adhesive/wallpaper paste in dry form wherein the adhesive composition is in the form of a powder or granulates according to the invention will as a rule be marketed as a packed commercial product, and in particular in the form of a powder or granules that is (are) packed in a box, can, bag, tin or another suitable container which, for example, can contain a unit quantity of the wallpaper paste according to the invention, such as, for example, 125 g for a normal paste or 200 g or 250 g for a special paste, and up to quantities of 500 g or more. Such (packed) commercial products form a further aspect of the invention. Furthermore, the invention also comprises bulk packs of the adhesive composition according to the invention, for example containing 5, 10 or 15 kg.

Said powder or granules can then be mixed with water by the end user - that is to say in amounts/ratios that are known per se and/or are suitable (for example 125 g powder in 6 litres of water for a normal paste and 200 g powder in 4 litres of water for a special paste) and usually just before use - (the odour-substance-releasing constituent in) the adhesive composition coming into contact with water and the one or more odour substances being released from the odour-releasing constituent and thus being released from/by the adhesive composition.

As a consequence, the use of the adhesive/wallpaper paste according to the invention will not be accompanied by the typical "glue odour" of the compositions customary to date. The odour substances will also advantageously be able to mask/prevent any unpleasant odour originating from wallpaper already on the wall and/or layers, such as an old glue layer or a sizing layer, present on the wall.

In a further aspect the invention therefore relates to the preparation of an aqueous adhesive composition, and in particular an aqueous wallpaper paste, comprising mixing a wallpaper paste composition according to the invention with a suitable quantity of water to form a ready-to-use adhesive composition.

The invention has been described above in particular with reference to (aqueous) adhesives based on the abovementioned base constituents, and more particularly with reference to wallpaper paste.

Furthermore, the invention comprises the incorporation/use of the odour-releasing constituents described herein in, for example, the abovementioned base constituents (or mixtures thereof) when these base constituents are supplied and/or marketed as raw material for the preparation of an adhesive composition according to the invention.

The use of odour-substance-releasing constituents described above in such compositions, as well as the compositions thus obtained, form further aspects of the invention.

The following non-limiting example illustrates the invention in more detail.

### Example

A wallpaper paste base composition was prepared by mixing 20 % (m/m) methylcellulose, 35 % (m/m) carboxymethylcellulose, 20 % (m/m) potato starch and 25 % (m/m) polyvinyl acetate and 0.5 % (m/m) of a preservative (Dowicil® 75 from Dow Corning) in a Nauta mixer. 1.2 % (m/m) of an odour-substance-releasing constituent (consisting of Beta-CD Complex (Wacker GmbH) containing 9.60 % citral) was added to this base composition.

The adhesive composition thus obtained was stirred with a suitable quantity of water and used as wallpaper paste. The paste had the pleasant odour of the citral odour substance from the odour-substance-releasing constituent.

## Claims

1. Adhesive composition, for use in or as wallpaper paste, which comprises:
- an adhesive;
- an odour-substance-releasing constituent that contains at least one odour substance and at least one carrier constituent,
**characterised in that** the adhesive composition is in a dry form, wherein the adhesive composition is in the form of a powder or granules, which is suitable for mixing with water by an end user and the odour substance is associated with the carrier constituent, that is selected from cyclodextrins and cyclodextrin derivatives, in such a way that the odour substance is essentially released from the odour-substance-releasing constituent only when the latter comes into contact with water.

2. Adhesive composition according to claim 1 that contains between 0.5 and 5% (m/m) of the odour-releasing constituent, based on the total adhesive composition.

3. Adhesive composition according to claim 1 or 2, in the form of a commercial product that is packed in a box, can, bag, tin or another suitable container; or in a bulk pack.

4. Adhesive composition according to one of claims 1-3, wherein the adhesive is selected from starch, starch derivatives, cellulose, cellulose derivatives and polyvinyl acetate.

5. Use of an odour-substance-releasing constituent that contains at least one odour substance and at least one carrier constituent, that is selected from cyclodextrins and cyclodextrin derivatives, in the preparation of an adhesive composition in dry form, wherein the adhesive composition is in the form of a powder or granules, that is intended to be mixed with water by an end user with the formation of a ready-to-use aqueous composition.

6. Use according to claim 5, wherein, in the odour-releasing constituent used, at least one odour substance is associated with the carrier constituent in such a way that the odour substance is essentially released from the odour-substance-releasing composition only when the latter comes into contact with water.

7. Use of an adhesive composition according to one of claims 1-4, as wallpaper paste.

## Patentansprüche

1. Klebemittelzusammensetzung zur Verwendung in oder als Tapetenkleister, umfassend:
- ein Klebemittel;
- einen duftfreisetzenden Bestandteil, der mindestens ein Duftsubstanz und mindestens einen Trägerbestandteil enthält,
**dadurch gekennzeichnet, dass** die Klebemittelzusammensetzung in einer trockenen Form ist, worin die Klebemittelzusammensetzung in der Form eines Pulvers oder von Granalien ist, die geeignet ist zum Mischen mit Wasser durch den Endanwender und die Duftsubstanz mit einem Trägerbestandteil verbunden ist, ausgewählt aus Cyclodextrinen und Cyclodextrinderivaten, auf eine solche Art, dass die Duftsubstanz im wesentlichen von dem duftfreisetzenden Bestandteil nur freigesetzt wird, wenn der letztere in Kontakt mit Wasser kommt.

2. Klebemittelzusammenstellung nach Anspruch 1, die zwischen 0,5 und 5 % (m/m) der duftfreisetzenden Substanz basierend auf der Gesamtklebemittelzusammenstellung enthält.

3. Klebemittelzusammenstellung nach Anspruch 1 oder 2 in der For meines Handelsprodukts, das verpackt ist in einer Schachtel, Dose, einem Beutel, einer Büchse oder einem anderen geeigneten Behälter; oder in einer losen Verpackung.

4. Klebemittelzusammenstellung nach einem Ansprüche 1 - 3, worin das Klebemittel ausgewählt ist aus Stärke, Stärkederivaten, Cellulose, Cellulosederivaten und Polyvinylacetat.

5. Verwendung eines duftfreisetzenden Bestandteils, der mindestens eine Duftsubstanz und mindestens einen Trägerbestandteil enthält, der ausgewählt ist aus Cyclodextrinen und Cyclodextrinderivaten, bei der Herstellung einer Klebemittelzusammensetzung in trockener Form, worin die Klebemittelzusammensetzung in der Form eines Pulvers oder von Granalien ist, die vorgesehen ist zum Mischen mit Wasser durch einen Endanwender unter Bildung einer gebrauchsfertigen wässrigen Zusamensetzung.

6. Verwendung nach Anspruch 5, worin in dem duftfreisetzenden Bestandteil mindestens eine Duftsubstanz mit dem Trägerbestandteil auf eine solche Art verbunden ist, dass die Duftsubstanz der duftfreisetzenden Zusammensetzung wesentlich nur freigesetzt wird, wenn die letztere in Kontakt mit Wasser komt.

7. Verwendung einer Klebemittelzusammensetzung nach einem der Ansprüche 1-4 als Tapetenkleister.

## Revendications

1. Composition adhésive, destinée à une utilisation dans ou en tant que colle pour papier peint, qui comprend:
- un adhésif ;
- un constituant libérant une substance odorante qui contient au moins une substance odorante et au moins un constituant vecteur,
**caractérisée en ce que** la composition adhésive est sous forme sèche, dans laquelle la composition adhésive est sous forme d'une poudre ou de granules, que est appropriée pour un mélange avec de l'eau par un utilisateur final, et **en ce que** la substance odorante est associée au constituant vecteur, qui est choisi parmi les cyclodextrines et les dérivés de cyclodextrines, de telle sorte que la substance odorante est essentiellement libérée du constituant libérant une substance odorante uniquement lorsque ce dernier entre en contact avec l'eau.

2. Composition adhésive selon la revendication 1, que contient entre 0,5 et 5 % (m/m) du constituant libérant une substance odorante, sur la base de la composition adhésive totale.

3. Composition adhésive selon la revendication 1 ou 2, sous la forme d'un produit commercial qui est emballé dans une boîte, une cannette, un sac, une caisse ou tout autre récipient approprié, ou dans un emballage en vrac.

4. Composition adhésive selon l'une quelconque des revendications 1 à 3, dans laquelle l'adhésif est choisi parmi l'amidon, les dérivés d'amidon, la cellulose, les dérivés de cellulose et le polyvinylacétate.

5. Utilisation d'un constituant libérant une substance odorante qui contient au moins une substance odorante et au moins un constituant vecteur, qui est choisi parmi les cyclodextrines et les dérivés de cyclodextrines, pour la préparation d'une composition adhésive sous forme sèche, dans laquelle la composition adhésive est sous forme d'une poudre ou de granules, qui est destinée à être mélangée à de l'eau par un utilisateur final, avec la formation d'une composition aqueuse prête à l'emploi.

6. Utilisation selon la revendication 5, dans laquelle, dans le constituant libérant la substance odorante utilisé, au moins une substance odorante est associée au vecteur, de telle sorte que la substance odorante est essentiellement libérée du constituant libérant une substance odorante uniquement lorsque ce dernier entre en contact avec l'eau.

7. Utilisation d'une composition adhésive selon l'une des revendications 1 à 4 en tant que colle pour papier peint.
